# EUROPEAN PATENT SPECIFICATION

(11) **EP 2 744 728 B1**
(45) Date of publication and mention of the grant of the patent: **20.12.2017**
(21) Application number: 12826420.7
(22) Date of filing: 16.08.2012
(51) Int. Cl.: B65D 81/24, D21H 19/60, D21H 23/70, D21H 25/08, B32B 27/10, B65D 65/40

(54) **PROCESS FOR PROVIDING A SURFACE WITH A BARRIER AND A SUBSTRATE BEING PRODUCED ACCORDING TO THE PROCESS**
VERFAHREN ZUR BEREITSTELLUNG EINER FLÄCHE MIT EINER SPERRSCHICHT UND NACH DIESEM VERFAHREN HERGESTELLTES SUBSTRAT
PROCÉDÉ DESTINÉ À POURVOIR UNE SURFACE D'UNE BARRIÈRE ET SUBSTRAT PRODUIT PAR LA MISE EN OEUVRE DE CE PROCÉDÉ

(30) Priority: 19.08.2011 SE 1150753
(43) Date of publication of application: 25.06.2014
(73) Proprietor: Stora Enso Oyj, 00101 Helsinki (FI)
(72) Inventor: BACKFOLK, Kaj, FI-53130 Lappeenranta (FI); HEISKANEN, Isto, FI-55100 Imatra (FI)
(74) Representative: Steinrud, Henrik
(86) International application number: PCT/IB2012/001598
(87) International publication number: WO 2013/027103

(56) References cited:
- WO-A1-2011/003564
- WO-A1-2011/056130
- JP-A- H0 813 389
- JP-A- H06 142 133
- US-A- 4 515 833
- US-A1- 2006 286 294

## Description

### Field of invention

The present invention relates to a process for providing a surface of a substrate with a barrier layer, a process for forming a film with barrier properties as well as a substrate produced according to the process. By the present invention it is possible to provide a substrate with a barrier in a very easy and efficient way.

### Background

Fiber based products used as packages must both be able to protect the packed product from outer influences as well as withstand the influence of the packed product. One way to achieve the desired protection is to provide the package with a barrier.

In the case of perishable products, such as oxygen sensitive products, oxygen barrier characteristics of the package are required to provide extended shelf life for the packaged product. By limiting the exposure of oxygen-sensitive products to oxygen or gas, the quality and shelf life of many products are maintained and enhanced. For instance, by limiting the oxygen exposure of oxygen-sensitive food products in a packaging system, the quality of the food product can be maintained and spoilage retarded. This is for example due to that reduced oxygen content limits growth of aerobic bacteria. Consequently, such packaging keeps the product in inventory longer, thereby reducing costs occurred from increased waste and thus also the necessity to having to restock.

In case of products in the form of liquids and/or greasy surfaces barriers against liquids and/or grease can be used in order to increase the package's resistance of the packed product.

Barriers are normally created by coating the fiber based substrate with a composition which gives the substrate barrier properties. Different coatings can be applied depending on the needed properties of the barrier. The most commonly used materials when forming a barrier on a fiber based product, are polyethylene (PE), polypropylene (PP), polyethylene therephthalate (PET), ethylene vinyl alcohol (EVOH) or ethylene vinyl acetate (EVA). EVOH is normally used in order to create oxygen barriers and PE or PET is normally used in order to create a liquid and/or vapor barrier. The polymers are normally either laminated or extrusion coated to the fiber based product. However, a polymer layer that gives a product barrier properties normally needs to be relatively thick and it is thus quite costly to produce such barrier.

The most common way to approach reduction of oxygen transmission (OTR) through a paper or paperboard is to use multiple polymer layers. In this way, one layer can provide low OTR, whereas other layers can provide water repellency and/or low water vapor transmission rates. Another possibility is to add nano-particles to barriers in order to create a so called tortousity effect.

Another commonly used material in order to produce a barrier is aluminum. A layer comprising aluminum is above all used in order to improve the oxygen and light barrier of a paper or paperboard product. The thickness of an aluminum layers is normally quite thin, often around 7-9 µm. Aluminum gives excellent barrier properties but it strongly increases the carbon dioxide load (carbon foot print) of the product. Furthermore, aluminum decreases the possibility to recycle the package and it also affects the biodegradability. There is therefore a demand from producers, converters and end users to avoid the use of aluminum layers in paper or paperboard products in order to decrease the carbon dioxide load of a product. Another disadvantage with the use of aluminum is that the process for depositing the aluminum on a paper or paperboard product is very complicated. The process often takes place in low vacuum chambers which requires very dry substrates and specified conditions. One example of a solution to replace the aluminum layer is described in WO2008076033.

It is also possible to use other techniques, such as blade coating, film press coating, curtain coating, spray coating and rod coating in order to create barriers on fibrous surfaces. Most of these techniques are capable of creating a barrier, particularly if coating thickness exceeds 10 g/m² (dry). Some of these methods, such as curtain coating, require addition of surface active agents in the coating mixture in order to control the dynamic surface tensions and be able to form a barrier on a paper or paperboard. Addition of surface active agents is not always suitable since the surface active agents may prevent the formation of barriers. Spray coating is another alternative, but this is often limited to solution viscosity and surface tension and therefore not applicable. One example of coating of a paper is described in US4515833.

Thin layer coatings such as atomic layer deposition (ALD) or chemical vapor deposition (CVD) are capable of creating very thin layers on a paper or paperboard. However these techniques usually require vacuum conditions and are usually limited by speed, width or the paper or paperboard and investment cost.

It is also possible to create a barrier layer by the use of rotogravure printing or reverse rotogravure printing of a coating comprising a polymer and nanoclay on a surface of a substrate, thereby providing the substrate with a barrier against oxygen. However, rotogravure printing is a relatively slow process and not suitable for pigmented dispersions and it is not possible to provide a substrate with a barrier at high speed and/or in wide machines. Another disadvantage with the use of rotogravure printing is the maintenance and 24/7 operation with such unit.

There is thus a need for an improved process for providing a substrate with a barrier.

### Summary of Invention

The object of the present invention is to provide a process that in a fast and easy way are able to provide a surface with a barrier.

Another object of the present invention is to provide a paper or board product with a barrier.

These objects, as well as other objects and advantages, are achieved by the process according to claim 1 and claim 2. The present invention relates to a process for providing a substrate with a barrier wherein the process comprises the steps of applying a coating mixture to the surface of the substrate, at least partly drying the coated surface of the substrate and applying a barrier activating solution to the dried coated surface in order to form a barrier on the surface of the substrate, wherein the coating mixture comprises at least one water soluble polymer and at least one kind of nano-particle. The present invention also relates to a process for forming a film with barrier properties wherein the process comprises the following steps: applying a coating mixture to a surface, at least partly drying the coated surface and applying a barrier activating solution to the at least partly dried coated surface in order to form a film with barrier properties, wherein the coating comprises at least one water soluble polymer and at least one kind of nano-particle. By combining coating of a surface of a substrate or coating a surface in order to form a film, with the mentioned coating mixture followed by activating the barrier, will give the surface of the substrate or the film barrier properties in a very fast and efficient way.

The formed film is preferably attached to the surface of a substrate, preferably by laminating the film to the surface of the substrate.

The water soluble polymer used in the coating mixture is preferably polyvinylalcohol (PVA). PVA has the advantage of forming a barrier at beneficial conditions that are very suitable for the process according to the invention.

The nano-particles of the coating mixture are nanoclays such as bentonite or vermiculite, microfibrillated cellulose, aluminum silicates, nano precipitated calcium carbonate, nanotalcum, nanotitanium dioxide, xylane, carboxy methyl cellulose (CMC) and/or silica. It is possible to mix different nano-particles or to add one kind of nano-particles to the coating mixture.

The barrier activating solution applied comprises at least 95 wt% of water. However, other solutions such as mixtures of water and alcohol can also be used. The solution may be added in liquid form but it is also possible that the solution is applied in the form of steam or vapor.

The coating mixture is applied in an amount so that the dry coating quantity is below 10 g/m², more preferably below, 5 g/m² and even more preferably below 2 g/m². It is an advantage with the present invention that only low amounts of coating is necessary in order to provide the surface with a barrier.

The coating mixture is preferably applied by foam coating. It is preferred that the coating mixture does not comprise any surface active agents, i.e. that it is free from surface active agents. Since the coating comprises nano-particles which will work as a stabilizer of the coating mixture, it is not necessary to add any surface active agents. Since no surface active agents are present it is possible to form a thin layer barrier coating.

The barrier activating solution is preferably applied by spraying. It may also be possible to combine the spraying of the solution with a rod, roll or blade to be used on the surface in order to even the surface during or after the application of the barrier activating solution to the surface.

The coating is applied in a single step. It is normally sufficient to apply one coating layer in order to achieve the necessary properties of the barrier.

The process is preferably an on-line process, preferably on-line with a paper or paperboard machine.

The process may further comprise the addition of a polymer layer to the formed barrier layer. In this way it is possible to combine the barrier layer according to the invention with additional barrier layers. The polymer layer is preferably polyethylene (PE) or polyethylene terephthalate (PET).

The invention also relates to a paper or board product treated according to the process described above.

The product to be treated has preferably a smooth and non-porous surface. The surface of the product to be treated preferably has a smoothness (Bendtsen) of below 1000 ml/min.

It is preferred that the board product being treated comprises a polymer and that it is a liquid packaging board. The board product preferably comprises a coating layer in an amount of less than 10g/m2 (dry), preferably less than 5g/m2 (dry).

### Detailed description of the invention

The present invention relates to a process for providing a surface of a substrate with a barrier layer or a process to form a film with barrier properties in a very fast and efficient way.

It has been shown that it is possible to provide a surface of a substrate with a barrier or to produce a film with barrier properties by applying a coating mixture comprising at least one water soluble polymer and at least one kind of nano-particle to a surface, followed by at least partly drying the coated surface and addition of a barrier activating solution to the dried coated surface wherein a substrate respectively a film with barrier properties is formed. The combination of the specific coating followed by activation of the coating will form a barrier on the surface. A big advantage with the present invention is that the process can be done on-line at high speeds, at wide paper or board machines and that no major investments are necessary, i.e. equipment that normally is available can be used. Furthermore, the coating layer can be very thin and still make a very good barrier.

It is thus possible to provide a surface with a barrier layer on-line in a fast process and at a wide paper or board machine, i.e. it is very well suited for commercially use. It is possible to run the process according to the invention at machine speeds of above 100 m/min and preferably above 400 m/min. The width of the substrate or surface to be treated is preferably above 2 meters, more preferably above 3 meters or even more preferred above 4 meters.

Since the coat weights of the present invention are lower that previous used, the microroughness or pinholes in the applied coating, including coating hold-out, becomes very critical when low OTR values are attained. Small defects or variations in coating layer might have severe effect on the behavior of the barrier layer. However, the application of a barrier activation solution will reduce the probability to have these surface defects.

The water soluble polymer is preferably polyvinylalcohol (PVA) or modified products or mixtures thereof. It has been shown that PVA is especially suitable for the formation of barrier according to this process. This is due to that PVA has the ability form good films and it dissolves in a characteristic way which has been shown to work very well in this process. The water soluble polymer may also be carboxymethyl cellulose (CMC) or hemicelluloses and it is also possible to combine CMC and/or hemicelluloses with other water soluble polymers such as PVA.

The nano-particles are nanoclay, e.g.bentonite, or vermiculite, microfibrillated cellulose including cellulose whiskers and cellulose nanocrystals, aluminum silicates, nano precipitated calcium carbonate, nanotalcum, nanotitanium dioxide, xylane, carboxymethyl cellulose (CMC) and/or silica. The said barrier can also be made from commercial formulations.

The presence of nano-particles might improve physical and mechanical properties of the coating. The presence of nano-particles will also stabilize the coating mixture, but also provide improved OTR properties to the coating. In this way, surface active agents are unnecessary and it is thus possible to produce a barrier from the coating mixture of the present invention. The presence of surface active agents in a coating mixture will make it difficult to produce a barrier since surface active agents will migrate to the surface and interrupt film formation of the polymer. The surface active agents may also form clusters at the surface or at interfaces and both will deteriorate the barrier properties, the mechanical properties of the barrier and might also reduce interfacial adhesion with the top coating layer (if any). The surface active agents will furthermore act as small particles and during drying, they will move with the liquid towards the surface making the coating layer discontinuous and this will thus destroy the barrier properties of the coating layer.

The ratio between the polymer and the nanoparticles of the coating mixture is preferably between 1:100-1:10 (polymer: nanoparticle).

The activating solution added to the coated surface of the substrate is preferably a water based solution. By adding a water based solution to the coating comprising water soluble polymers and nano-particles it is possible to activate and smoothen the surface and hence reduce any pin-holes or other irregularities of the coating layer, making sure that a good barrier is formed. The barrier activating solution is preferable added by spraying the solution to the surface of the substrate. It may be preferred to combine the addition of solution by spraying with a blade or a roll to be used on the surface in order to even the coating during or after the solution is applied to the surface. The blade or roll will thus be in contact with the surface and thus also the activated barrier coating layer. This is done in order to make sure that coating is smooth and even after the applied solution is added to the surface. The roll can be a calendaring roll/s. It is also possible to add the solution in the form of foam, steam or vapor, preferably in connection with calendering the coated surface. However, any other conventionally method for applying solution to the surface can be used. The needed amount of activating solution depends on many different parameters, e.g. the dry content and type of coating mixture.

The activating solution used comprises at least 95% of water, or preferably more than 98 wt% of water and most preferably more than 99.5 wt% of water. It is also possible that the solution only comprises water, i.e. 100 wt% of water. The activating solution affects the components of the coating mixture, either the water soluble polymer and/or the nano-particles, so that a barrier is formed. There are many different ways for the solution to affect the components, e.g. the polymers and/or the nano-particles of the coating mixture may swell when in contact with the solution or the particles and/or the polymers of the coating mixture will migrate in the coating layer and thus form a barrier. The solution may also comprise alcohol. Furthermore, the solution may comprise functional additives such as polymers, nanoparticles, a primer, a solvent and/or a multivalent metal salt. The purpose of the functional additive may be to improve the barrier properties, improve printability of the substrate, change friction of the surface and/or to improve the adhesion to a top coating layer, such as a PE layer.

The coated surface is at least partly dried before addition of the barrier activating solution. The dry solid content of the at least partly dried substrate is preferably above 75 wt%. It is possible to complete dry the coated substrate before addition of the barrier activating solution.

It is preferred that the coating mixture is applied in a sufficient quantity in order, after drying, to form a continuous thin coating layer throughout the entire width of the surface. The coating layer forming the barrier is preferably very thin but still possible to coat on fiber based substrates. It has been shown that even though the coating layer is thin, a good barrier can still be produced. The coating is added in a quantity of below 10 g/m2 (dry), more preferably below 5 g/m2 (dry), or even more preferably below 2 g/m2 (dry). If foam coating of PVA and a nano-particle is used it is possible to reduce the coating quantity to between 0,5-2 g/m2 (dry) and still be able to produce a good barrier.

The coating mixture is preferably added by foam coating. In order to be able to use foam coating the coating mixture must be very stable. The stability of the coating mixture is normally achieved by addition of surface active agents. However, as discussed above, the presence of surface active agents will not make it possible to form a barrier. Since the coating mixture of the present invention comprises nano-particles that stabilize the coating, it is not necessary to add any surface active agents and it is thus possible to use foam coating for the production of a barrier on the surface of a substrate or as film according to the invention.

It is also possible to use other coating techniques such as blade coating or a size press for the formation of a coating layer of the surface of a substrate or in order to form a barrier.

It is preferred to add the coating mixture to the substrate in one single step. It is thus not necessary to provide the surface of the substrate with more than one coating layer. Since the necessary quantity of coating mixture in the coating layer can be very low, it is sufficient to add the coating in one step and still be able to form a good barrier.

The microfibrillated cellulose (MFC) mentioned as a nano-particle is also known as nanocellulose. It is a material typically made from wood cellulose fibers, both from hardwood or softwood fibers. It can also be made from microbial sources, agricultural fibers such as wheat straw pulp, bamboo or other non-wood fiber sources. In microfibrillated cellulose the individual microfibrils have been partly or totally detached from each other. A microfibrillated cellulose fiber is normally very thin (∼20 nm) and the length is often between 100 nm to 10 µm. However, the microfibrils may also be longer, for example between 10-200 pm, but lengths even 2000 um can be found due to wide length distribution. Fibers that has been fibrillated and which have microfibrils on the surface and microfibrils that are separated and located in a water phase of a slurry are included in the definition MFC. Furthermore, whiskers are also included in the definition MFC.

The barrier is preferably a barrier against oxygen, gases, aromas, grease and/or alcohol. It is possible to combine the barrier according to the invention with other barrier layers, such as a barrier layer against liquid. This is especially suitable if a board used as a liquid packaging board is produced. It is then preferred to provide the board substrate with a coating layer according to the invention and thereafter add a layer with barrier properties against liquids, such as a PE or a PET layer, on top of the barrier according to the invention. In this way the board will have both oxygen and liquid barrier properties. It is also possible to combine the barrier according to the invention with another barrier structure based on bio barrier such as PLA, PGA, bio-PE, starch, protein or polysaccharide based barriers. In this way a more biodegradable product can be produced.

The substrate of the present invention is preferably a substrate comprising cellulosic fibers, such as a paper or board. However, other substrates such as plastics, laminates, wall paper and textiles can also be used.

The surface of the substrate is preferably smooth and non-porous. A smooth and non-porous surface will make it easier to provide the surface with a thin coating layer that will work as a barrier. It is preferred that the surface of the product to be treated according to the invention has a surface smoothness (Bentsen) of at least 1000 ml/min.

In order for a barrier to form on the surface, it is important that the surface is smooth and above all that no holes appear in the barrier. In order for a good barrier to form by coating it is also important that the coating is evenly distributed, i.e. that there are no caliper or grammage variations of the coating layer. It is also important that it is chemically even, i.e. that the coating is evenly chemically distributed. The coating layer forming a barrier must also stay on the surface of the surface to which it is coated. Furthermore, the barrier layer must possess good adhesive properties to the substrate to which it is coated and also to a top coating if it is added. The barrier coating should also possess good mechanical properties making it possible to convert the substrate to which it is added without breaking the barrier layers during converting or other mechanical handling.

The present invention also relates to a paper or board product produced according to the process. It is preferred that the board product being provided with the barrier according to this invention together with a layer with liquid barrier properties is used as a liquid packaging board. The paper or board product produced may also be used as food packages, such as frozen food materials or dry food materials. The paper or board product produced according to the process is provided with a thin but yet very effective barrier.

## Claims

1. A process for providing a surface of a substrate, comprising cellulosic fibers, with a barrier against oxygen, wherein the process comprises the following steps:
- applying a coating mixture to the surface of the substrate in an amount so that the dry coating quantity is below 10 g/m2, which coating is applied in one, single step,
- at least partly drying the coated surface of the substrate and
- applying a barrier activating solution, comprising at least 95 wt% of water, to the at least partly dried coated surface in order to form a barrier on the surface of the substrate,
wherein the coating mixture comprises at least one water soluble polymer and at least one kind of nano-particle wherein said nano-particle is nanoclays, such as bentonite or vermiculite, microfibrillated cellulose, aluminum silicates, nano precipitated calcium carbonate, nanotalcum, nanotitanium dioxide, xylane, carboxy methyl cellulose and/or silica.

2. The process according to any of the preceding claims wherein the water soluble polymer of the coating mixture being applied is polyvinylalcohol (PVA).

3. The process according to any of the preceding claims wherein the solution is added in the form of steam or vapor.

4. The process according to any of the preceding claims wherein the coating mixture being applied in an amount so that the dry coating quantity is below 5 g/m2.

5. The process according to any of the preceding claims wherein the coating mixture is applied by foam coating.

6. The process according to any of the preceding claims wherein the coating mixture being applied is free from surface active agents.

7. The process according to any of the preceding claims wherein the barrier activating solution is applied by spraying.

8. The process according to any of the preceding claims wherein a blade or roll is used on the surface in order to even the surface during or after the solution is applied to the surface.

9. The process according to any of the preceding claims wherein the process is an on-line process.

10. The process according to any of the preceding claims wherein a polymer layer is added on the formed barrier layer.

11. Paper or board product treated according to the process of any of the preceding claims.

12. The paper or board product according to claim 11 wherein the substrate to be treated has a smooth surface with a smoothness (Bendtsen) below 1000 ml/min.

13. Board product treated according to claim 11 wherein the board is a liquid packaging board.

14. Board product according to claim 11 wherein the board comprises a coating layer in an amount of less than 5 g/m2 (dry).

## Patentansprüche

1. Prozess zur Bereitstellung einer Oberfläche eines Substrats, umfassend Cellulosefasern mit einer Sauerstoffbarriere, wobei der Prozess die folgenden Schritte umfasst:
- Auftragen eines Beschichtungsgemisches auf die Oberfläche eines Substrats in einer solchen Menge, dass die trockene Beschichtungsmenge unter 10 g/m² liegt, wobei die Beschichtung in einem einzelnen Schritt aufgetragen wird,
- mindestens teilweise Trocknen der beschichteten Oberfläche des Substrats und
- Auftragen einer Barriere-aktivierenden Lösung, die mindestens 95 Gew.-% Wasser umfasst, auf die mindestens teilweise getrocknete beschichtete Oberfläche, um eine Barriereschicht auf der Oberfläche des Substrats zu bilden,
wobei das Beschichtungsgemisch mindestens ein wasserlösliches Polymer und mindestens eine Art von Nanopartikeln umfasst, wobei es sich bei jenen Nanopartikeln um Nanotonerden, wie z. B. Betonit oder Vermiculit, mikrofibrillierte Cellulose, Aluminiumsilikate, Nano-präzipitiertes Calciumkarbonat, Nano-Talkum, Nano-Titanoxid, Xylan, Carboxymethylcellulose und/oder Siliciumdioxid, handelt.

2. Prozess nach einem der vorherigen Ansprüche, wobei es sich bei dem wasserlöslichen Polymer des Beschichtungsgemisches, das aufgetragen wird, um Polyvinylalkohol (PVA) handelt.

3. Prozess nach einem der vorherigen Ansprüche, wobei die Lösung in Form von Dampf oder Nebel aufgetragen wird.

4. Prozess nach einem der vorherigen Ansprüche, wobei das Beschichtungsgemisch in einer solchen Menge aufgetragen wird, dass die trockene Beschichtungsmenge unter 5 g/m² liegt.

5. Prozess nach einem der vorherigen Ansprüche, wobei das Beschichtungsgemisch mittels Schaumbeschichtung aufgetragen wird.

6. Prozess nach einem der vorherigen Ansprüche, wobei das Beschichtungsgemisch, das aufgetragen wird, frei von oberflächenaktiven Stoffen ist.

7. Prozess nach einem der vorherigen Ansprüche, wobei die Barriere-aktivierende Lösung durch Sprühen aufgetragen wird.

8. Prozess nach einem der vorherigen Ansprüche, wobei ein Messer oder eine Walze auf der Oberfläche verwendet wird, um die Oberfläche während des Auftragens der Lösung auf der Oberfläche oder danach zu glätten.

9. Prozess nach einem der vorherigen Ansprüche, wobei es sich bei dem Prozess um einen Online-Prozess handelt.

10. Prozess nach einem der vorherigen Ansprüche, wobei eine Polymerschicht auf der gebildeten Barriereschicht aufgetragen wird.

11. Papier- oder Kartonprodukt, das nach einem Prozess von einem der vorherigen Ansprüche behandelt wird.

12. Papier- oder Kartonprodukt nach Anspruch 11, wobei das zu behandelnde Substrat eine glatte Oberfläche mit einer Glätte (Bendtsen) unter 1000 ml/min aufweist.

13. Kartonprodukt, das nach Anspruch 11 behandelt wird, wobei der Karton ein Getränkekarton ist.

14. Kartonprodukt nach Anspruch 11, wobei der Karton eine Beschichtungsschicht mit einer Stärke von 5 g/m² (trocken) umfasst.

## Revendications

1. Procédé destiné à pourvoir une surface d'un substrat, comprenant des fibres cellulosiques, d'une barrière contre l'oxygène, où le procédé comprend les étapes suivantes :
- l'application d'un mélange de revêtement à la surface du substrat dans une quantité telle que la quantité de revêtement sec est inférieure à 10 g/m², lequel revêtement est appliqué en une seule étape,
- le séchage au moins partiel de la surface du substrat revêtue, et
- l'application d'une solution activant la barrière, comprenant au moins 95 % en poids d'eau, à la surface revêtue au moins partiellement séchée afin de former une barrière sur la surface du substrat,
dans lequel le mélange de revêtement comprend au moins un polymère soluble dans l'eau et au moins un type de nano-particule, où ladite nano-particule est une nano-argile, telle que la bentonite ou la vermiculite, de la cellulose microfibrillée, des silicates d'aluminium, du carbonate de calcium nano précipité, du nano-talc, du nano dioxyde de titane, du xylane, de la carboxy méthyl cellulose et/ou de la silice.

2. Procédé selon l'une quelconque des revendications précédentes, dans lequel le polymère soluble dans l'eau du mélange de revêtement étant appliqué est de l'alcool polyvinylique (PVA).

3. Procédé selon l'une quelconque des revendications précédentes, dans lequel la solution est ajoutée sous la forme de brouillard ou de vapeur.

4. Procédé selon l'une quelconque des revendications précédentes, dans lequel le mélange de revêtement est appliqué dans une quantité telle que la quantité de revêtement sèche est inférieure à 5 g/m².

5. Procédé selon l'une quelconque des revendications précédentes, dans lequel le mélange de revêtement est appliqué par un revêtement de mousse.

6. Procédé selon l'une quelconque des revendications précédentes, dans lequel le mélange de revêtement étant appliqué est exempt d'agents actifs de surface.

7. Procédé selon l'une quelconque des revendications précédentes, dans lequel la solution activant la barrière est appliquée par pulvérisation.

8. Procédé selon l'une quelconque des revendications précédentes, dans lequel une lame ou un rouleau est utilisé sur la surface afin d'unifier la surface pendant ou après que la solution est appliquée sur la surface.

9. Procédé selon l'une quelconque des revendications précédentes, où le procédé est un procédé en ligne.

10. Procédé selon l'une quelconque des revendications précédentes, dans lequel une couche de polymère est ajoutée à la couche de barrière formée.

11. Produit à base de papier ou de carton traité d'après le procédé selon l'une quelconque des revendications précédentes.

12. Produit à base de papier ou de carton selon la revendication 11, dans lequel le substrat à traiter a une surface lisse avec une rugosité (Bendtsen) inférieure à 1000 ml/min.

13. Produit à base de carton traité selon la revendication 11, dans lequel le carton est un carton d'emballage de liquide.

14. Produit à base de carton selon la revendication 11, dans lequel le carton comprend une couche de revêtement dans une quantité inférieure à 5 g/m² (sèche).
